# EUROPÄISCHE PATENTSCHRIFT

(11) **EP 3 740 433 B1**
(45) Veröffentlichungstag und Bekanntmachung des Hinweises auf die Patenterteilung: **01.05.2024**
(21) Anmeldenummer: 18829200.7
(22) Anmeldetag: 30.11.2018
(51) Int. Cl.: B65D 41/04, B65D 47/08, B32B 27/08, B32B 27/32, B29C 45/16

(54) **BEHÄLTERVERSCHLUSS**
CONTAINER CLOSURE
DISPOSITIF DE FERMETURE DE RÉCIPIENT

(30) Priorität: 15.01.2018 DE 102018000233
(43) Veröffentlichungstag der Anmeldung: 25.11.2020
(73) Patentinhaber: Georg Menshen GmbH & Co. KG, 57413 Finnentrop (DE)
(72) Erfinder: RÖMER, Frank, 57413 Finnentrop (DE); WOMMELSDORF, Jan, 57399 Kirchhundem (DE); BEER, Marc, 58513 Lüdenscheid (DE); KÖLSCHE, Volker, 58579 Schalksmühle (DE)
(74) Vertreter: Cohausz Hannig Borkowski Wißgott
(86) Internationale Anmeldenummer: PCT/EP2018/000537
(87) Internationale Veröffentlichungsnummer: WO 2019/137597

(56) Entgegenhaltungen:
- EP-A1- 0 570 276
- EP-A1- 0 669 261
- EP-A1- 2 065 163
- EP-A1- 2 100 822
- EP-A2- 1 174 241
- WO-A1-01/68468
- US-A- 4 803 031
- US-A1- 2006 099 424
- US-A1- 2015 114 967

## Beschreibung

Die Erfindung betrifft einen Behälterverschluss mit einer auf den Behälter-Entnahmestutzen befestigbaren, insbesondere aufschraubbaren oder aufsteckbaren, haubenförmigen Verschlusskappe aus Kunststoff.

Es ist bekannt Behälterverschlüsse der eingangs genannten Art aus nicht recyceltem Polypropylen oder Polyethylen im Spritzguß herzustellen. Es könnte daran gedacht werden statt einem nicht recycelten Kunststoff ein Kunststoff-Recyclat zu verwenden. Da recycelter Kunststoff in seiner Qualität sehr schwankt und unbekannte Inhaltsstoffe besitzen kann, die in den Behälterinhalt übertreten können, werden Recyclate bisher in der Regel nicht verwendet. Zudem würden Behälterverschlüsse aus einem Kunststoff-Recyclat eine zuverlässige Dichtung des Verschlusses nicht sicherstellen.

Aus der EP 2 100 822 A1 ist es bekannt, die Verschlussteile, die mit dem Behälterinhalt nicht in Berührung kommen, aus einem ersten Kunststoff zu fertigen und die Verschlussteile, die mit dem Behälterinhalt in Berührung kommen, aus einem zweiten Kunststoff zu fertigen.

Aufgabe der Erfindung ist es bei einem Behälterverschluss der eingangs genannten Art ein Kunststoff-Recyclat in möglichst großer Menge zu verwenden, ohne die Funktionssicherheit zu verringern und ohne optische Einbußen.

Diese Aufgabe wird erfindungsgemäß durch einen Behälterverschluß mit den Merkmalen des Anspruchs 1 gelöst.

Ein in dieser Weise aufgebauter Behälterverschluss besitzt eine hohe Funktionssicherheit und insbesondere eine hohe Dichtigkeit im geschlossenen Zustand, da die für das Abdichten zuständigen Verschlussbereiche aus einem nicht recycelten Kunststoffmaterial bestehen und nur die übrigen Verschlussbereiche aus einem Kunststoff-Recyclat. Zudem werden durch einen solchen Aufbau Materialkosten gespart und die Umwelt geschont. Ferner wird eine stärkere mechanische Beanspruchung des nicht recycelten Kunststoffs vermieden.

Vorzugsweise wird vorgeschlagen, dass die Verschlussteile, die mit dem Behälterinhalt in Berührung kommen, aus Polypropylen und die Verschlussteile, die mit dem Behälterinhalt nicht in Berührung kommen, aus einem Polypropylen-Recyclat bestehen. Alternativ wird vorgeschlagen, dass die Verschlussteile, die mit dem Behälterinhalt in Berührung kommen, aus Polyethylen und die Verschlussteile, die mit dem Behälterinhalt nicht in Berührung kommen, aus einem Polyethylen-Recyclat bestehen.

In einer Ausführungsart ist an der Verschlusskappe über ein Scharnier ein verschwenkbarer Klappdeckel aus Kunststoff befestigt, der eine obere Entnahmeöffnung der Verschlusskappe verschließt und dessen mit dem Behälterinhalt in Berührung kommenden Bereich aus nicht recyceltem Kunststoff besteht. Eine solcher Klappdeckel-Steckverschluss besitzt eine sehr gute Scharnierfestigkeit im Originalmaterial mit leicht fließendem und/oder härteren Recycling-Material für die Schale und den Deckel/die Kopfplatte.

Hierbei ist die Verschlusskappe von einer Außenwand umgeben, an der der Klappdeckel angelenkt ist, wobei die Außenwand aus recyceltem Kunststoff besteht. Der Klappdeckel weist auf seiner Unterseite einen Vorsprung auf, der die Entnahmeöffnung der Verschlusskappe verschließt, wobei der Klappdeckel bis auf den Verschließvorsprung und ein Bodenbereich aus recyceltem Kunststoff besteht.

Ausführungsbeispiele der Erfindung sind in den Zeichnungen 9 bis 14 dargestellt und werden im Folgenden näher beschrieben. Die übrigen Zeichnungen stellen nicht erfindungsgemäße Ausführungen dar und dienen nur dem besseren technischen Verständnis. Es zeigen:
- Fig. 1: einen Schraubverschluss im Schnitt,
- Fig. 2: eine Ansicht von oben auf den Schraubverschluss nach Fig. 1,
- Fig. 3: einen zweiten Schraubverschluss im Schnitt,
- Fig. 4: eine Ansicht von oben auf den Schraubverschluss nach Fig. 3,
- Fig. 5: einen dritten Schraubverschluss im Schnitt,
- Fig. 6: eine Ansicht von oben auf den Schraubverschluss nach Fig. 5,
- Fig. 7: einen vierten Schraubverschluss im Schnitt,
- Fig. 8: eine Ansicht von oben auf den Schraubverschluss nach Fig. 7
- Fig. 9: ein erstes Ausführungsbeispiel eines Klappdeckelverschlusses im Schnitt,
- Fig. 10: eine Ansicht von oben auf den Verschluss nach Fig. 9,
- Fig. 11: ein zweites Ausführungsbeispiel eines Klappdeckels im Schnitt,
- Fig. 12: eine Ansicht von oben auf den Klappdeckel nach Fig. 11
- Fig. 13: ein drittes Ausführungsbeispiel eines Klappdeckels im Schnitt,
- Fig. 14: eine Ansicht von oben auf den Klappdeckel nach Fig. 13.

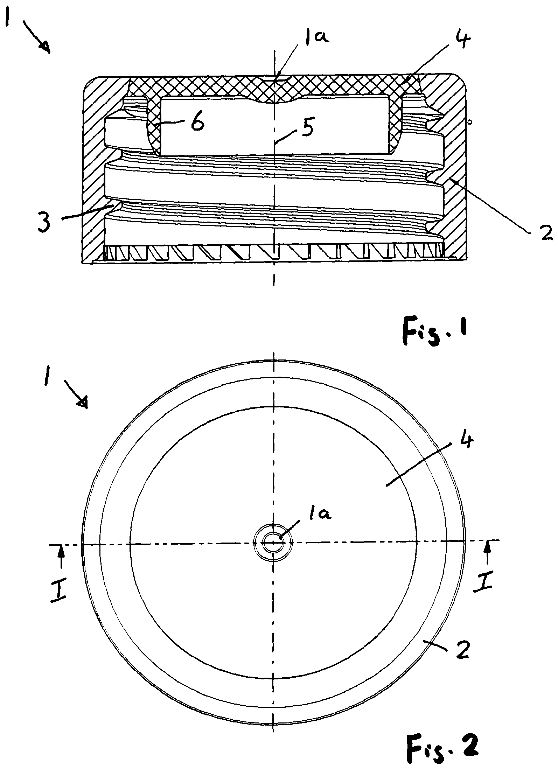

Der in Fig. 1 und 2 dargestellte Schraubverschluss weist eine haubenförmige Verschlusskappe 1 auf mit einem Anspritzpunkt 1a und einer zylindrischen Wand 2, auf deren Innenwand ein Innengewinde 3 angeformt ist, mit dem die Verschlusskappe auf die halsförmige Mündung eines Behälters aufgeschraubt wird.

Während die Wand 2 der Verschlusskappe aus einem recyceltem Kunststoff besteht, besteht der Kappenboden 4 aus einem nicht recycelten Kunststoff einschließlich einem zur Kappenachse 5 koaxialen ringförmigen Dichtkonus 6, der auf der Innenseite des Kappenbodens vorspringt und die Aufgaben hat, bei aufgeschraubter Kappe 1 in der Mündung des Behälters abdichtend einzuliegen.

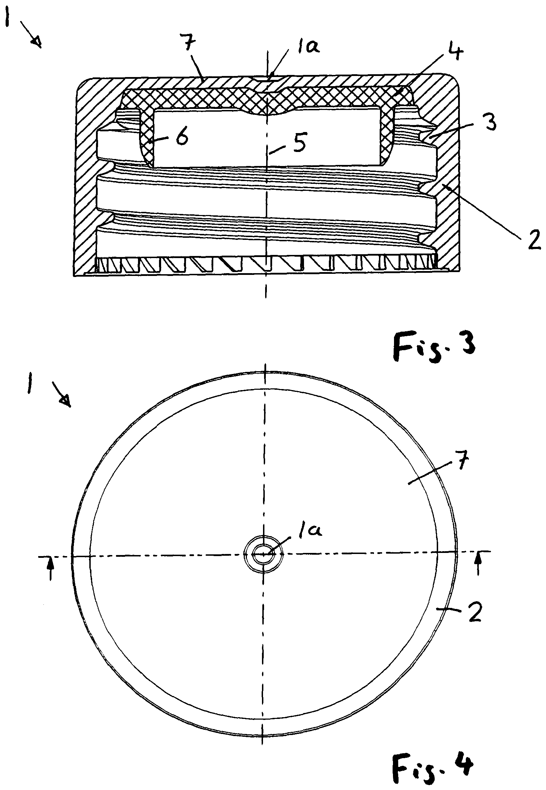

Die in den Fig. 3 und 4 dargestellten zweite Version eines Schraubverschlusses unterscheidet sich von der ersten dadurch, dass der abdichtende Kappenboden 4 oberseitig von einer Bodenschicht 7 bedeckt ist, die aus recyceltem Kunststoff besteht und an die Wand 2 angeformt ist.

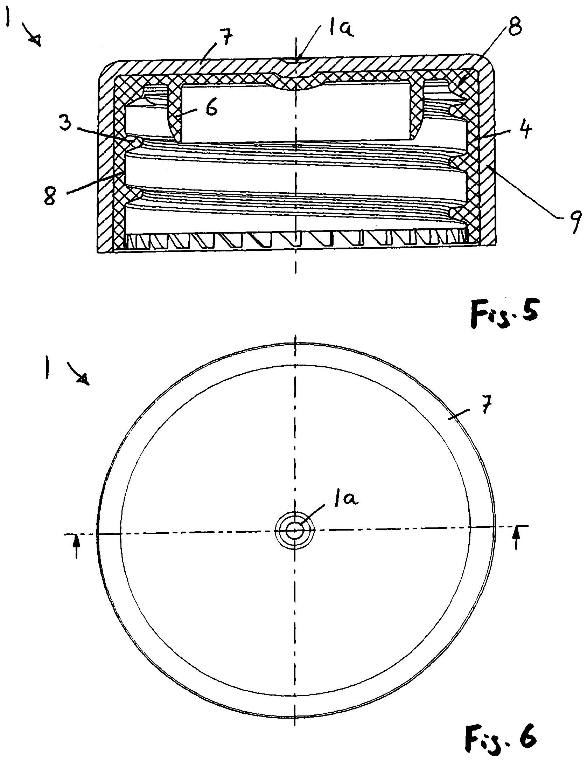

Die in den Fig. 5 und 6 dargestellte dritten Version eines Schraubverschlusses unterscheidet sich von der zweiten Version dadurch, dass der abdichtende Kappenbodenbereich 4 Teil einer Innenkapsel 8 ist, die die Außenkapsel 9 aus Recyceltem ausfüllt, eine das Innengewinde 3 bildende Innenwand besitzt und aus nicht recyceltem Kunststoff besteht.

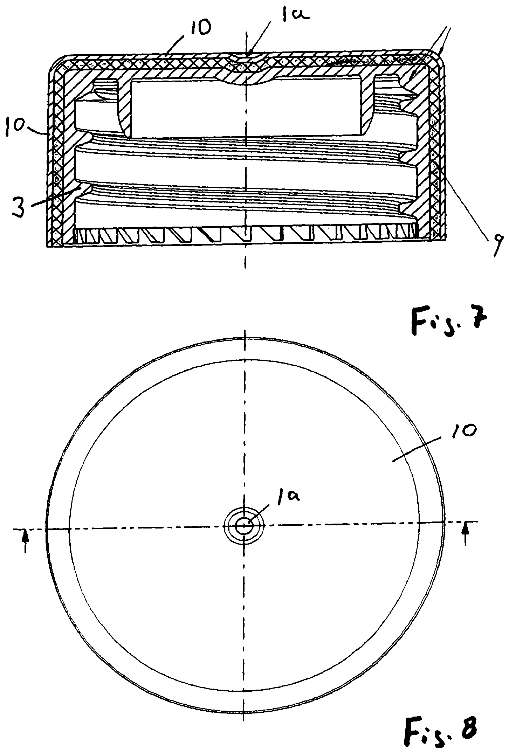

Die in dem Fig. 7 und 8 dargestellte vierte Version eines Schraubverschlusses unterscheidet sich von der dritten Version dadurch, dass außen um die Außenkapsel 9 aus Recyclat mit einer die Außenkapsel vollständig umgebenden Außenschicht 10 aus nicht recyceltem Kunststoff bedeckt ist, so dass die Schicht der Außenkapsel 9 aus Recyclat zwischen zwei Schichten aus nicht recyceltem Kunststoff liegt. Eine solche Außenschicht hat eine hohe optische Qualität und Farbechtheit.

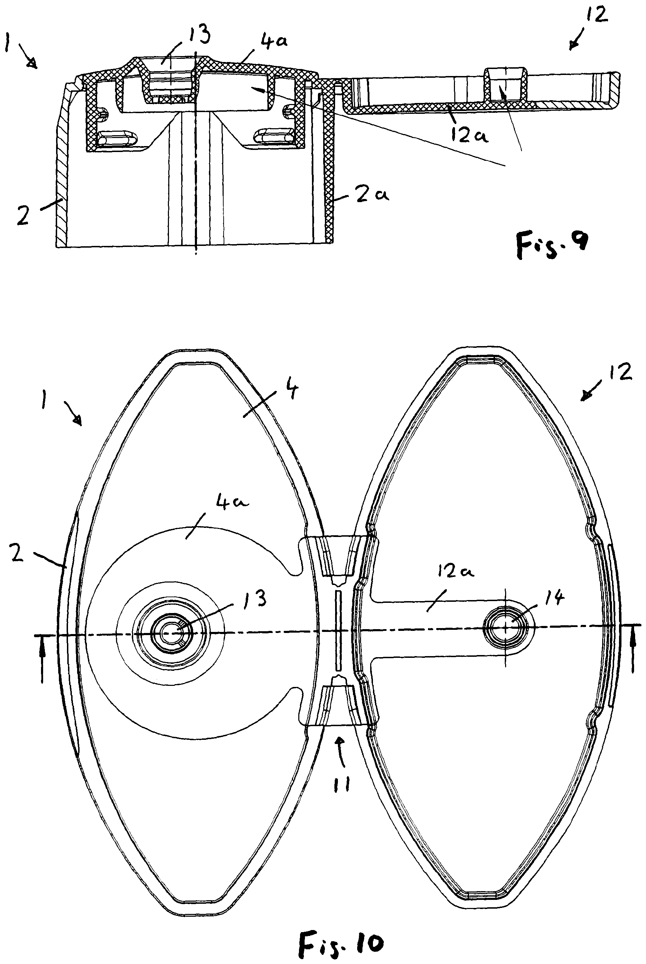

In den Ausführungen nach Fig. 9 bis 14 bildet der Behälterverschluss einen Steckverschluss mit einer haubenförmigen Verschlusskappe 1, die mit ihrer im Querschnitt ovalen Wand 2 auf die halsförmige ovale Mündung eines Behälters aufgesteckt wird und durch eine Rastverbindung gehalten ist. Hierbei besteht die Wand 2 und der obere Boden 4 der haubenförmigen Verschlusskappe 1 aus einem recycelten Kunststoff.

Die Wand 2 ist durch einen senkrechten Wandbereich 2a unterbrochen, der aus einem nicht recyceltem Kunststoff besteht. An diesem Wandbereich 2a ist ein Scharnier 11 angeformt, an dem auf einer Seite ein kreisförmiger Bodenbereich 4a des Bodens 4 und auf der anderen Seite ein schmaler Bodenbereich 12a eines Klappdeckels 12 angeformt ist (Fig. 9 und 10). Der Bodenbereich 4a bildet eine Auslaßöffnung 13, die durch einen auf der Innenseite des Bodenbereich 12a des Klappdeckels 12 vorspringenden Stopfen 14 verschlossen ist, wenn der Klappdeckel 12 zugeklappt ist. Hierbei bestehen das Scharnier 11, die Bodenbereiche 4a und 12a sowie die Auslassöffnung 13 und der Stopfen 14 aus nicht recyceltem Kunststoff und dagegen die übrigen Bereiche der Verschlusskappe 1 und des Klappdeckels 12 aus einem Kunststoff-Recyclat.

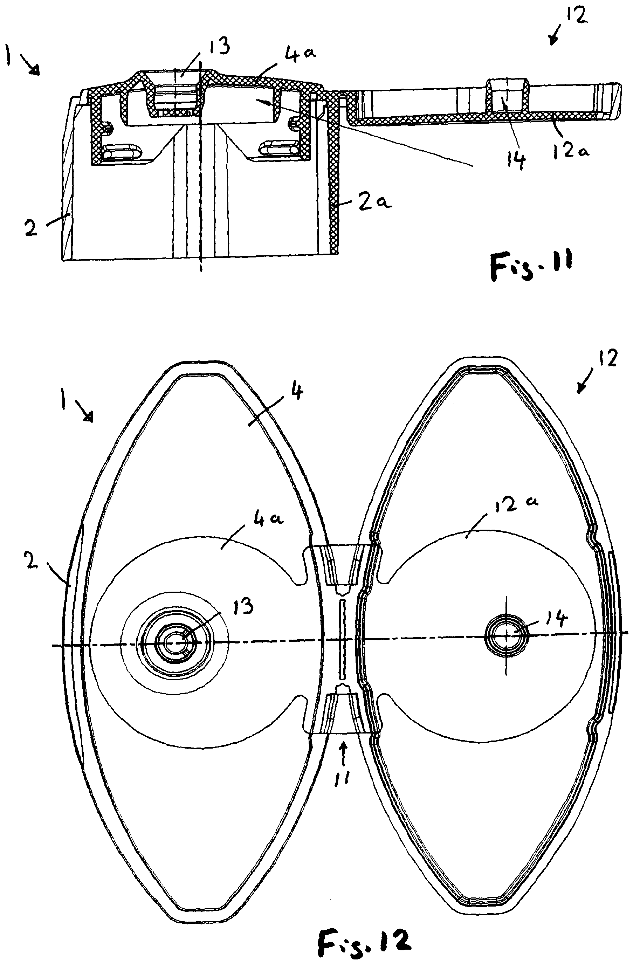

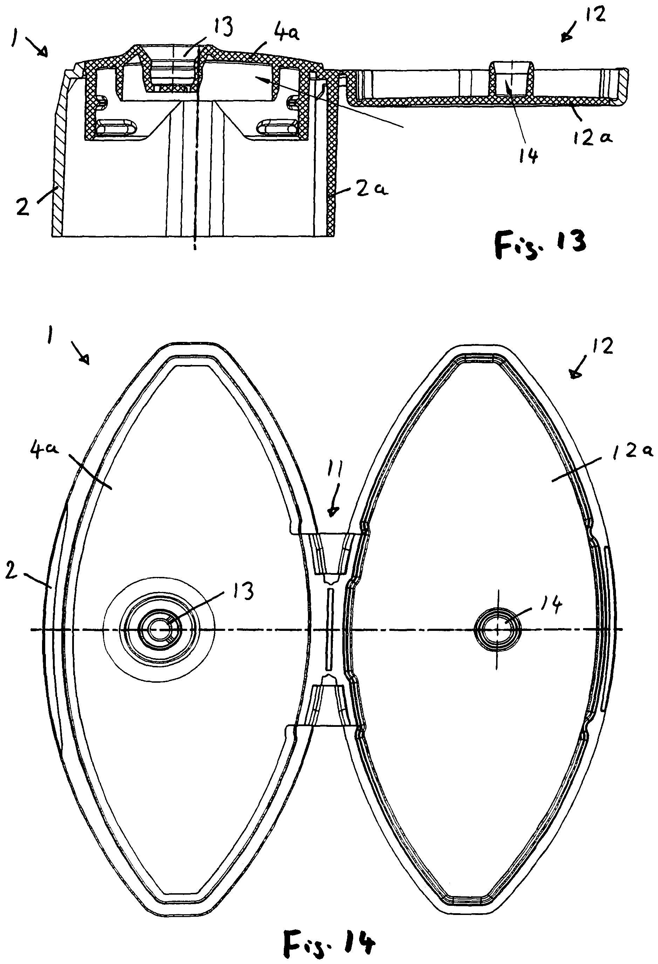

Die Ausführung nach Fig. 11 und 12 unterscheidet sich von der nach Fig. 9 und 10 dadurch, dass der Bodenbereich 12a des Klappdeckels 12 größer, insbesondere kreisförmig ausgeführt ist. In der Ausführung nach Fig. 13 und 14 nimmt der Bodenbereich 4a des Kappenbodens 4 und der Bodenbereich 12a des Klappdeckels 12 die gesamte Bodenfläche ein.

## Patentansprüche

1. Behälterverschluss mit einer auf den Behälter-Entnahmestutzen befestigbaren insbesondere aufschraubbaren oder aufsteckbaren, haubenförmigen Verschlusskappe (1) aus Kunststoff, **dadurch**
**gekennzeichnet,**
- **dass** an der Verschlusskappe (1) über ein Scharnier (11) ein verschwenkbarer Klappdeckel (12) aus Kunststoff befestigt ist, der eine obere Entnahmeöffnung (13) der Verschlusskappe verschließt und die für das Abdichten zuständigen Verschlussbereiche aus einem nicht recyceltem Kunststoffmaterial bestehen und nur die übrigen Verschlussbereiche aus einem Kunststoff-Recyclat bestehen
- **dass** die Verschlusskappe (1) von einer Außenwand (2) umgeben ist, an der der Klappdeckel (12) angelenkt ist, wobei die Außenwand (2) aus recyceltem Kunststoff besteht,
- **dass** die Wand (2) durch einen senkrechten Wandbereich (2a) aus nicht recyceltem Kunststoff unterbrochen ist, an dem ein Scharnier (11) angeformt ist,
- **dass** an dem Scharnier
∘ auf einer Seite ein kreisförmiger Bodenbereich (4a) aus nicht recyceltem Kunststoff des oberen Bodens (4) aus recyceltem Kunststoff der Verschlußkappe (1) und auf der anderen Seite ein schmaler Bodenbereich (12a) aus nicht recyceltem Kunststoff des Klappdeckels (12) angeformt ist, oder
∘ auf einer Seite ein kreisförmiger Bodenbereich (4a) aus nicht recyceltem Kunststoff des oberen Bodens (4) aus recyceltem Kunststoff der Verschlußkappe (1) und auf der anderen Seite ein kreisförmiger Bodenbereich (12a) aus nicht recyceltem Kunststoff des Klappdeckels (12) angeformt ist, oder
∘ auf einer Seite ein Bodenbereich (4a) aus nicht recyceltem Kunststoff angeformt ist, der die gesamte Bodenfläche des Kappenbodens (4) einnimmt und auf der anderen Seite ein Bodenbereich (12a) aus nicht recyceltem Kunststoff angeformt ist, der die gesamte Bodenfläche des Klappdeckels (12) einnimmt,
- **dass** der Bodenbereich (4a) des oberen Bodens (4) eine Auslaßöffnung (13) bildet, die durch einen auf der Innenseite des Bodenbereichs (12a) des Klappdeckels (12) vorspringenden Stopfen (14) verschlossen ist, wenn der Klappdeckel (12) zugeklappt ist,
- **dass** das Scharnier (11), die Bodenbereiche (4a, 12a), die Auslaßöffnung (13) und der Stopfen (14) aus nicht recyceltem Kunststoff bestehen und die übrigen Bereiche der Verschlußkappe (1) aus einem Kunststoff-Recyclat bestehen.

2. Behälterverschluss nach Anspruch 1, **dadurch gekennzeichnet, dass** die Verschlussteile (2, 12), die mit dem Behälterinhalt in Berührung kommen, aus Polypropylen und die Verschlussteile (4, 4a, 12a, 13, 14), die mit dem Behälterinhalt nicht in Berührung kommen, aus einem Polypropylen-Recyclat bestehen.

3. Behälterverschluss nach Anspruch 1, **dadurch gekennzeichnet, dass** die Verschlussteile (2, 12), die mit dem Behälterinhalt in Berührung kommen, aus Polyethylen und die Verschlussteile (4, 4a, 12a, 13, 14), die mit dem Behälterinhalt nicht in Berührung kommen, aus einem Polyethylen-Recyclat bestehen.

## Claims

1. Container closure having a hood-shaped closure cap (1) which is made from plastic and is fastenable, in particular screwable or pluggable, onto the container removal stub, **characterized**
- **in that** a pivotable hinged lid (12) which is made from plastic is fastened to the closure cap (1) via a hinge (11) and closes an upper removal opening (13) of the closure cap, and the closure regions responsible for the sealing are composed of a non-recycled plastics material and only the remaining closure regions are composed of a plastics recycled material,
- **in that** the closure cap (1) is surrounded by an outer wall (2) on which the hinged lid (12) is articulated, wherein the outer wall (2) is composed of recycled plastic,
- **in that** the wall (2) is interrupted by a vertical wall region (2a) made from non-recycled plastic and on which a hinge (11) is integrally formed,
- **in that**, on the hinge,
∘ a circular base region (4a) made from non-recycled plastic of the upper base (4) made from recycled plastic of the closure cap (1) is integrally formed on one side, and a narrow base region (12a) made from non-recycled plastic of the hinged lid (12) is integrally formed on the other side, or
∘ a circular base region (4a) made from non-recycled plastic of the upper base (4) made from recycled plastic of the closure cap (1) is integrally formed on one side, and a circular base region (12a) made from non-recycled plastic of the hinged lid (12) is integrally formed on the other side, or
∘ a base region (4a) made from non-recycled plastic and taking up the entire base surface of the cap base (4) is integrally formed on one side, and a base region (12a) made from non-recycled plastic and taking up the entire base surface of the hinged lid (12) is integrally formed on the other side,
- **in that** the base region (4a) of the upper base (4) forms an outlet opening (13) which is closed by a stopper (14) projecting on the inner side of the base region (12a) of the hinged lid (12) when the hinged lid (12) is shut,
- **in that** the hinge (11), the base regions (4a, 12a), the outlet opening (13) and the stopper (14) are composed of non-recycled plastic and the remaining regions of the closure cap (1) are composed of a plastics recycled material.

2. Container closure according to Claim 1, **characterized in that** the closure parts (2, 12) which come into contact with the container contents are composed of polypropylene and the closure parts (4, 4a, 12a, 13, 14) which do not come into contact with the container contents are composed of a polypropylene recycled material.

3. Container closure according to Claim 1, **characterized in that** the closure parts (2, 12) which come into contact with the container contents are composed of polyethylene and the closure parts (4, 4a, 12a, 13, 14) which do not come into contact with the container contents are composed of a polyethylene recycled material.

## Revendications

1. Fermeture de récipient avec un capuchon de fermeture (1) en forme de coiffe en matière plastique pouvant être fixé, notamment vissé ou emboîté, sur l'embout de prélèvement du récipient, **caractérisée en ce que**
- un couvercle rabattable pivotant (12) en matière plastique est fixé sur le capuchon de fermeture (1) par l'intermédiaire d'une charnière (11), qui ferme une ouverture de prélèvement supérieure (13) du capuchon de fermeture et les zones de la fermeture responsables de l'étanchéité sont constituées d'un matériau plastique non recyclé et seules les autres zones de la fermeture sont constituées d'un matériau plastique recyclé,
- le capuchon de fermeture (1) est entouré d'une paroi extérieure (2), sur laquelle est articulé le couvercle rabattable (12), la paroi extérieure (2) étant constituée de matière plastique recyclée,
- la paroi (2) est interrompue par une zone de paroi verticale (2a) en matière plastique non recyclée, sur laquelle est formée une charnière (11),
- sur la charnière est formée
∘ d'un côté une zone de fond circulaire (4a) en matière plastique non recyclée du fond supérieur (4) en matière plastique recyclée du capuchon de fermeture (1) et de l'autre côté une zone de fond étroite (12a) en matière plastique non recyclée du couvercle rabattable (12), ou
∘ d'un côté une zone de fond circulaire (4a) en matière plastique non recyclée du fond supérieur (4) en matière plastique recyclée du capuchon de fermeture (1) et de l'autre côté une zone de fond circulaire (12a) en matière plastique non recyclée du couvercle rabattable (12), ou
∘ d'un côté une zone de fond (4a) en matière plastique non recyclée, occupant toute la surface de fond du fond de capuchon (4), et de l'autre côté une zone de fond (12a) en matière plastique non recyclée, occupant toute la surface de fond du couvercle rabattable (12),
- la zone de fond (4a) du fond supérieur (4) forme une ouverture de sortie (13) fermée par un bouchon (14) en saillie sur le côté intérieur de la zone de fond (12a) du couvercle rabattable (12) lorsque le couvercle rabattable (12) est rabattu,
- la charnière (11), les zones de fond (4a, 12a), l'ouverture de sortie (13) et le bouchon (14) sont constitués de matière plastique non recyclée et les autres zones du capuchon de fermeture (1) sont constituées d'un matériau plastique recyclé.

2. Fermeture de récipient selon la revendication 1, **caractérisée en ce que** les parties de la fermeture (2, 12) qui entrent en contact avec le contenu du récipient sont constituées de polypropylène et les parties de la fermeture (4, 4a, 12a, 13, 14) qui n'entrent pas en contact avec le contenu du récipient sont constituées d'un polypropylène recyclé.

3. Fermeture de récipient selon la revendication 1, **caractérisée en ce que** les parties de la fermeture (2, 12) qui entrent en contact avec le contenu du récipient sont constituées de polyéthylène et les parties de la fermeture (4, 4a, 12a, 13, 14) qui n'entrent pas en contact avec le contenu du récipient sont constituées d'un polyéthylène recyclé.
